# EUROPEAN PATENT APPLICATION

(11) **EP 2 211 052 A2**
(43) Date of publication of application: **28.07.2010**
(21) Application number: 10150800.0
(22) Date of filing: 14.01.2010
(51) Int. Cl.: F03D 1/00, F03D 11/00, F03D 11/04

(54) **Wind Turbine Tower And Assembly Method Using Friction Forging**

(30) Priority: 21.01.2009 US 357159
(71) Applicant: General Electric Company, Schenectady, NY 12345 (US)
(72) Inventor: Spiegel, Lyle B., Niskayuna, NY 12309 (US); Sathian, Sujith, Simpsonville, SC 29681 (US)
(74) Representative: Bedford, Grant Richard

(57) **Abstract**

Embodiments of the present disclosure include a system for creating a lattice type structure (20) using friction forge bonds (54) to connect the tower members (16). The system includes a rotary actuator (38) for engaging and rotating a fastener (36) to create frictional heat at a forge interface (66) between the fastener (36) and two or more workpieces (16). The system also includes a press (40) that forces the fastener (36) against the workpieces (16) to be bonded, and a heater (42) that may provide additional heating of the fastener (36) and the opening (56).

## Description

The subject matter disclosed herein relates generally to a wind turbine tower and an associated assembly method using friction forging.

A wind turbine tower may include a tubular pole or a lattice structure, which supports a wind turbine at a considerable height to capture wind energy. The tubular pole is relatively more simple and easy to assemble than the lattice structure. However, tubular poles use more steel than the lattice structure, resulting in a cost disadvantage with rising prices of steel. The lattice structure uses less steel, yet is relatively more complex due to numerous joints. These joints increase construction time and present possible locations for wear and maintenance. For example, vibration caused by wind against the wind turbine tower can loosen bolted connections over time. The bolted connections may be replaced with arc welded joints. Unfortunately, arc welded joints also may have drawbacks.

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

In one embodiment, a system includes a lattice structure comprising a plurality of crosswise members and a friction forge bond between a first member and a second member of the plurality of crosswise members.

In another embodiment, a system includes friction forge bonding first and second members of a lattice structure that has a plurality of crosswise members.

In another embodiment, a system includes a press configured to linearly move a stud toward first and second members of a lattice structure, a drive configured to rotate the stud along an interface including both the first and second members to generate friction and heat to create a friction forge bond at the interface, and a heater configured to pre-heat or post heat treat the stud, the first member, the second member, or a combination thereof, relative to the creation of the friction forge bond.

Various features, aspects, and advantages of the present invention will become better understood when the following detailed description is read with reference to the accompanying drawings in which like characters represent like parts throughout the drawings, wherein:
FIG. 1 is a block diagram illustrating an embodiment of a system for fabricating an improved lattice-type tower using friction forge bonds;
FIG. 2 is a more detailed block diagram illustrating an embodiment of the friction forge system shown in FIG. 1;
FIG. 3 is a perspective view of a portion of the lattice-type tower of FIG. 1 illustrating various structural elements that may be bonded by the friction forge system of FIG. 2; and
FIGS. 4-8 are cross sections illustrating various embodiments of friction forge bonds that may be created by the friction forge system of FIG. 2.

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements. Any examples of operating parameters and/or environmental conditions are not exclusive of other parameters/conditions of the disclosed embodiments.

Embodiments of the present disclosure employ a friction forging technique for joining the structural components of a lattice-structure, such as a wind turbine tower. The improved lattice-structure wind turbine tower provides a high degree of mechanical strength compared to a tubular tower that uses the same amount of steel. Furthermore, the components of the wind tower may be more easily fabricated and transported to the construction site, compared to the sections of the much larger tubular structure. In this way, wind towers may be fabricated with hub heights as high as approximately 120 meters, 150 meters or higher. The friction forging techniques disclosed herein may be performed quickly and easily and provide a connection that is reliable under vibrational loading. As discussed below, friction forging techniques create friction by moving parts relative to one another, thereby creating heat that bonds the parts together without an electrical arc, flame, or the like. For example, one part (e.g., a stud) may spin relative to another part until the friction generates sufficient heat to forge the parts together. The resulting friction forged bond extends along the entire interface between the parts, rather than a mere surface joint typical of a weld. Thus, the friction forged bond is robust and may be more reliable than a bolted connection, an arc welded joint, or the like.

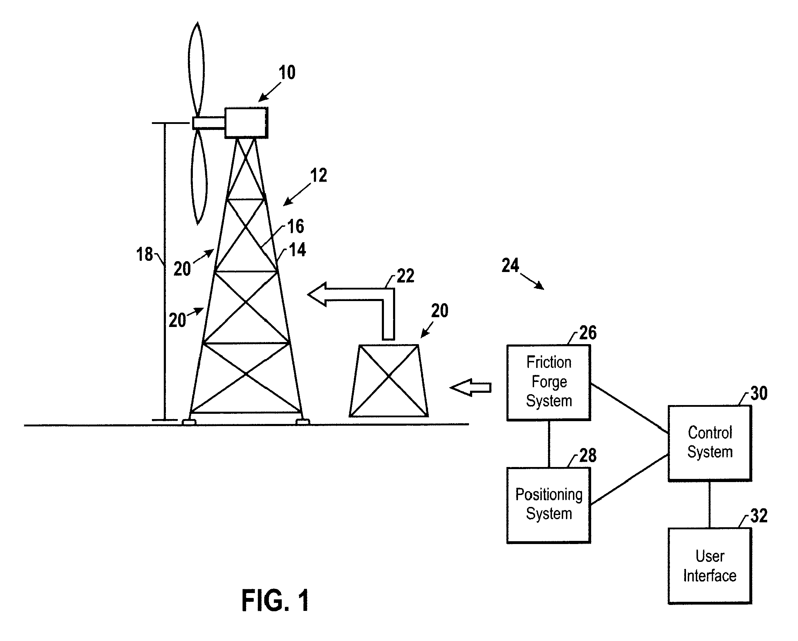

FIG. 1 is a block diagram illustrating an embodiment of a system for fabricating an improved lattice-type tower using friction forge bonds. FIG. 1 depicts a wind turbine 10 supported by a lattice tower 12 constructed in accordance with certain embodiments of friction forge bonds. The tower 12 includes leg members 14 and cross members 16. In some embodiments, the tower height 18, from the center of the wind turbine 10 to ground level may be approximately 120 to 150 meters or higher. In other embodiments, the height 18 may be less than 120 meters. The tower 12 may include any type of tower construction. For example, the tower 12 may be a triangular (three sided) tower, square (four sided) tower, tapered self-supporting tower, guyed tower, etc. The wind turbine 10 and tower 12 may be located on a wind farm with several wind turbines 10 and towers 12.

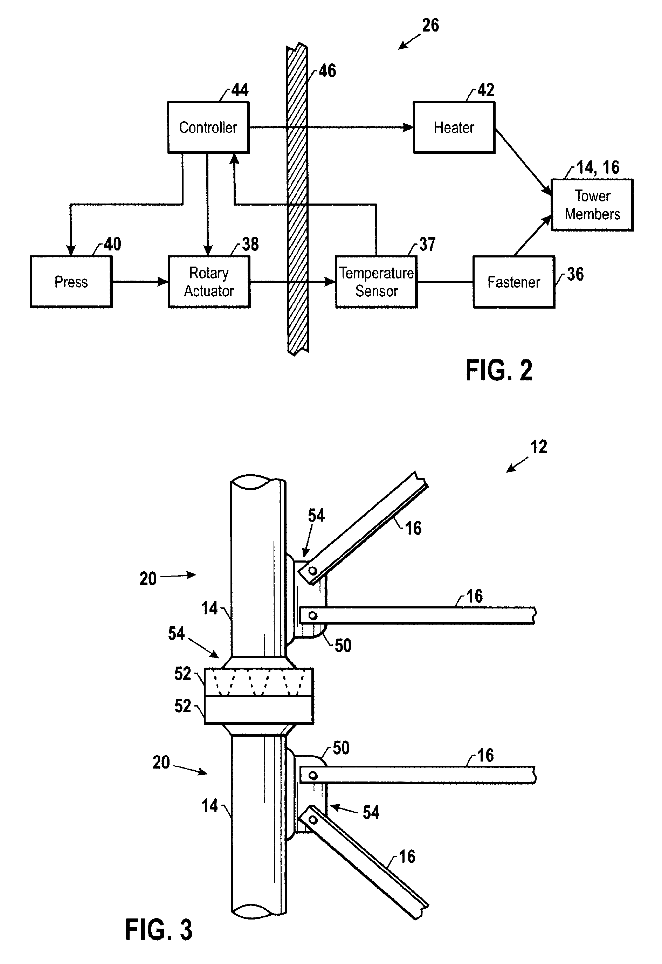

The tower 12 includes several tower sections 20 vertically stacked one over another. As indicated by arrow 22, the tower 12 may be constructed by fabricating individual tower sections 20 at ground level and then lifting the tower sections 20 into place. Each tower section 20 includes a lattice framework with a criss-crossed pattern of structural steel members. The steel members are coupled together using a tower construction system 24, which includes a friction forge system 26 for bonding the various structural members such as leg members 14 and cross-members 16. The friction forge system 26 will be described further below, in relation to FIG. 2. In certain embodiments, the friction forge system 26 may be portable and/or manually positionable. As such, the friction forge system 26 may be positioned by hand during the fabrication of the tower section 20. In some embodiments, however, the friction forge system 26 and/or the tower members 14 and 16 may be positioned automatically by a positioning system 28. The positioning system 28 may include a robotic arm, for example. Both the positioning system 28 and the friction forge system 26 may be controlled by a control system 30. The control system 30 may include one or more processors and may send electrical signals that control the operation of the friction forge system 26 and the positioning system 28. Furthermore, a user interface 32 may be communicatively coupled to the control system 30 to provide user control of the tower construction system 24.

FIG. 2 is a more detailed block diagram illustrating an embodiment of the friction forge system 26 shown in FIG. 1. The friction forge system 26 is used to join two or more tower members 14, 16. As will be explained further below, the friction forge system 26 operates by forging a fastener 36 to two or more adjoining tower members 14, 16 using frictional heat generated between the stationary tower members 14, 16 and the rotating fastener 36. Accordingly, the friction forge system 26 includes a rotary actuator 38 for rotating the fastener 36 and a press 40 for maintaining compression between the fastener 36 and the tower members 14, 16. The rotary actuator 38 may be an an electric motor, a hydraulic motor, or pneumatic (e.g., air) motor, or a combustion engine. The press 40 may be any device that maintains pressure between the fastener and the tower members 14, 16. For example, the press 40 may include springs and/or linear actuators which may be manually, electrically, or hydraulically activated. In some embodiments, the press 40 may be configured to increase or decrease the pressure between the fastener 36 and the tower members 14, 16 during the friction forging process. In other embodiments, the press 40 may maintain a substantially steady pressure.

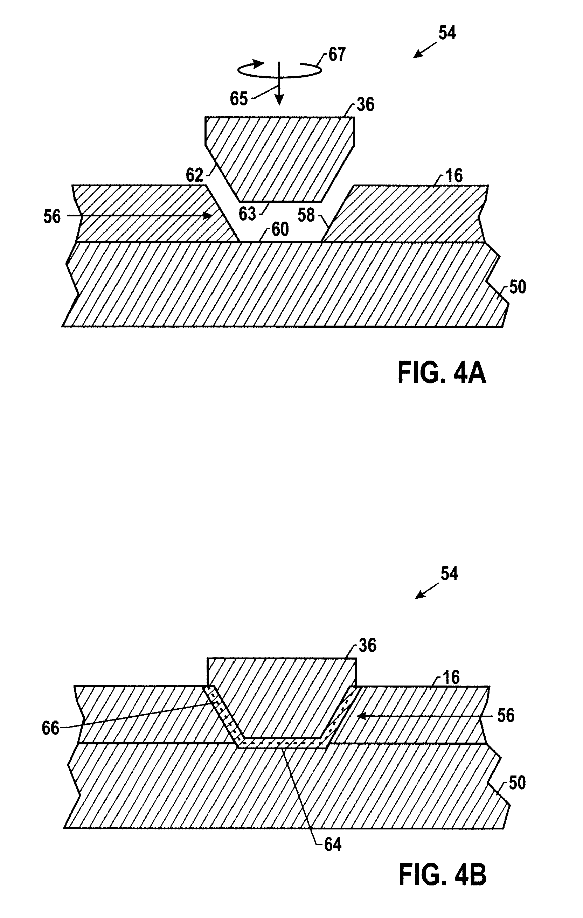

The friction forge system 26 may also include a heater 42. In embodiments, the heater 42 may be an induction heater and, as such, may include one or more induction coils energize by an alternating current for generating an electromagnetic field that heats the fastener and/or the tower members 14, 16. As will be discussed further below in relation to FIG. 4, the heater 42 may be used to pre-heat the forge area prior to rotating the fastener 36. In this way, the energy used by the rotary actuator 38 may be reduced. The heater 42 may also be used for post-forge heat treatment to reduce residual stresses resulting from the friction forge and thereby alter the material characteristics (e.g., toughness and hardness) of the forge region. Additionally, if a pre-heat treatment is used, the heat may penetrate a relatively wide area around the friction forge bond. As such, the heat produced by the friction forging process will diffuse more slowly. In this way, the cooling characteristics of the forge may be controlled similar to the post-forge heat treatment.

In some embodiments, one or more of the press 40, rotary actuator 38 and heater 42 may be controlled electronically. Thus, the friction forge system 26 may include a controller 44, which may include one or more processors programmed to control the friction forge process. The controller 44 may also include the user interface 32 to allow user control of the friction forge system 26. Additionally, the controller 44 may be controlled, at least in part, by the control system 30, allowing the friction forge process to be integrated with the process of positioning the friction forge system 26 and/or the tower members 14 and 16 via the positioning system 28. In other embodiments, the press 40, rotary actuator 38, and heater 42 may be manually engaged and controlled.

The friction forge system 26 may also include a temperature sensor 37 for determining the temperature of the bond during the forging process. For example, the temperature sensor 37 may be used to determine whether the materials to be joined have reached the forging temperature, i.e. the temperature at which the two metals will recrystallize and join together. For another example, the temperature sensor 37 may be used to control the induction heating process during the preheat stage and the post-forge heat treatment stage. The temperature sensor 37 may be deployed relative to the fastener 36 so that an accurate estimate of the temperature at the forge interface may be obtained. In one embodiment, the temperature of the forge interface may be estimated by directly measuring the temperature of an exposed surface of the fastener 36 and extrapolating the temperature at the forge interface. The temperature sensor 37 may be any suitable temperature sensor such as a thermistor or thermocouple. Temperature data from the temperature sensor 37 may be sent to the controller 44 and processed for automatic control of the forging process. For example, the various stages of the friction forge process may be triggered in response to pre-programmed temperature targets or temperature versus time profiles. Furthermore, the forging pressure, rotational speed, heater output, etc. may also be based on the measured and/or the desired temperature profile. In some embodiments, the temperature data may be processed for display to a user of the friction forge system 26.

In some embodiments, the friction forge system 26 may also include an enclosure 46 that partially or completely encloses the forge area. The enclosure 46 may be used to allow more accurate control of the heating characteristics of the forge area by insulating the forge area from the outside environment. In some embodiments, the enclosure 46 may allow the heater 42 to heat more than one friction forge bond at a time, thus reducing the overall duration of the forging process. In some embodiments, the enclosure 46 may also include a clamping device that holds the friction forge system 26 against the tower members 14, 16.

FIG. 3 is a perspective view of a portion of the tower 12 illustrating various structural elements that may be bonded by the friction forge system of FIG. 2. FIG. 3 depicts two tower sections 20 joined together by flanges 52. As shown in FIG. 3, the tower legs members 14 may be tubular and the ends of each leg member 14 may include a flange 52 for coupling the tower sections 20. The tower legs 14 may also include lugs 50 for enabling the attachment of the cross members 16. The cross members 16 may have an L-shaped cross-section. However, the members 14 and 16 may have any suitable cross-section, such as an L-shaped, rectangular, circular, triangular, or other cross-section. The tower legs 14 and cross members 16 may be members may be made of any high strength structural steel, such as ASTM 572 grade 50 steel, for example. Furthermore, the tower legs 14 and cross members 16 may also be made with steel that exhibits low temperature toughness, and is, therefore, capable of operating at temperatures below approximately 30 or 40 degrees Fahrenheit below zero. The flanges 52 and the lugs 50 may be fastened to the leg member 14 by traditional welding techniques.

The various tower members 14 and 16 may be bonded together by the friction forge system 26. As such, the tower 12 includes several friction forge bonds 54. For example, the cross members 16 may be fastened to the lugs 50 by friction forge bonds 54. Additionally, the flanges 52 may also be fastened together by friction forge bonds 54. Various styles of friction forge bond 54 will be described below in reference to FIGS. 4-8.

The tower design shown in FIG. 3 is only one example of a possible tower design that may be constructed using the disclosed embodiments and is not intended to be a limitation of the disclosed embodiments. For example, the cross members 16 may be fastened directly to the legs 14 rather than the lug 50. For another example, the tower sections 20 may be coupled by joining them with a sleeve or a brace rather than a flange 52. In any case, some or all of the tower member attachments may be made using the friction forging techniques described herein.

FIGS. 4A and 4B are cross sectional views illustrating an embodiment of a friction forge bond 54 in accordance with embodiments. FIG. 4A depicts a fastener 36 in relation to two workpieces, e.g., lug 50 and cross member 16, to be joined by the friction forging process. Although the illustration of FIG. 4A includes the lug 50 and cross member 16, it will be appreciated that other embodiments may include any combination of workpieces. The fastener 36 may be any type of suitable metal, such as high strength steel. In some embodiments, the fastener 36, the lug 50, and the cross member 16 may be the same material. However, in other embodiments, the fastener 36, the lug 50, and the cross member 16 may be dissimilar materials.

Before starting the friction forge process, the lug 50 and the cross member 16 may be held or clamped together. In some embodiments, a support may be used to hold the lug 50 and the fastener 36 together with the proper alignment. The proper alignment of the workpieces, in this case lug 50 and cross member 16, defines a recess or opening 56 with surfaces of all of the workpieces to be bonded. As shown in the embodiment of FIG. 4A, the opening 56 may be a cavity formed by pre-drilling the cross member 16 with a tapered through-hole such that the internal surfaces of the through-hole form the sides 58 of the opening 56 and the top surface of the lug 50 forms the bottom surface 60 of the opening 56. The sides 62 of the fastener 36 may be tapered to match the taper of the opening 56, and the bottom 63 of the fastener 36 may be flat to match the flat bottom surface 60 of the opening 56, i.e. the top of the lug 50. In this manner, the fastener 36 makes a strong frictional contact with a portion of both the lug 50 and the cross member 16.

During the friction forging process, the fastener 36 may be pressed into the opening 56, as indicated by arrow 65, and rotated, as indicated by arrow 67, to produce friction between the fastener 36 and the lug 50 and between the fastener 36 and the cross member 16. The rotational speed may depend on the level of axial pressure applied during the friction forging process and the dimensions of the workpiece including the diameter and size of the part's contact surface area. In some embodiments, the rotational velocity may be selected to provide a relative surface speed at the contacting faces in the range of 5 to 50 feet per second. Accordingly, the rotational speed used to achieve the required surface velocity may depend on the diameter of the rotating member. In certain embodiments, the rotational speed of the fastener may be between 12000 to 24000 revolutions per minute.

In some embodiments, the axial force at which the fastener 36 is pressed into the opening 56 may vary during the friction forging process. For example, during a heat-up phase, wherein the temperature of the joined parts is increased by the rotational friction, the axial force may be gradually increased in proportional to the rotational speed of the fastener 36 or the relative surface velocity of the fastener 36. When the fastener 36 and the workpieces reach the forging temperature, the axial force may be increased to a level which will apply sufficient compressive stress to permit local upset of the surrounding material and accomplish the forging.

The heat created by the friction between the fastener 36 and the opening 56 raises the temperature of the metal at the interface between the rotating fastener 36 and the stationary lug 50 and cross member 16. After a time period, the metal reaches the forging temperature, and the fastener 36 bonds with the lug 50 and the cross member 16, as shown in FIG. 4B. For example, depending on the pressure, rotational speed, and pre-heating the fastener 36 may bond with the lug 50 and cross-member 16 in less than approximately 5, 10, 15, 20, 30, 40, 50, or 60 seconds. During the friction forging process, dirt or other impurities that may have been present on the surface of the fastener 36 and the workpieces at the forge interface and are ejected from the opening 56. The ejected material may be defined as "flash." In some embodiments, the lug 50 and/or the cross member 16 may include a small recess for accepting the flash.

Additionally, as discussed above, the friction forge system 26 may use the heater 42 to pre-heat the forge area before rotating the fastener. Pre-heating the forge area may reduce the amount of rotational energy used to bring the forge interface up to the forging temperature. In some embodiments, the heater may raise the pre-forge temperature of the forge area to a value of up to approximately 600 to 700 degrees centigrade or more, up to the forging temperature. In some embodiments, the pre-heating may also be configured to influence the post-forge cooling characteristics of the forge area, as will be discussed further below.

Fig. 4B illustrates an embodiment of a friction forge bond created in the friction forging process described above in FIG. 4A. As shown in FIG. 4B, the fastener 36 is bonded to the lug 50 and the cross member 16 at the forge interface 66. As a result of the friction forging process, a thermo-mechanically affected zone 64 exists at the interface between the fastener 36 and the cross member 16 and between the fastener 36 and the surface of the lug 50. The thermo-mechanically affected zone 64 is an area around the forge interface 66 wherein the crystalline structure of the metals has been altered by the friction and heat.

Generally, the strength and hardness properties of the thermo-mechanically affected zone 64 may be altered by the friction forging process. In some embodiments, therefore, the friction forge bond 54 may undergo a post-forge heat treatment wherein the temperature and/or cooling rate of the thermo-mechanically affected zone 64 may be controlled using the heater 42. In some embodiments, the heater 42 may raise the temperature of the friction forge bond 54 to approximately 500 to 750 degrees centigrade or higher. The temperature of the friction forge bond 54 may then be maintained for a time period of up to approximately 2 hours plus 15 minutes per inch of thickness of the joined workpieces. Additionally, the pre-forge heat treatment may affect the cooling rate of the friction forge bond 54 by heating the metal around the forge interface so that heat from the forge interface 66 dissipates more slowly. Therefore, the pre-forge heat treatment discussed above may be configured to influence the cooling rate of the forge area such that the desired strength and hardness properties may be obtained without the use of a post-forge heat treatment.

As illustrated in FIG. 4B, the forge interface 66 is a subsurface material bond, which is not possible by an arc welding or fusion welding technique. In other words, an arc weld could bond the parts only at the surface where an arc could form and generate heat. Thus, the surface area of the interface 66 is substantially greater and deeper than an arc weld. Furthermore, the forge interface 66 is 3-dimensional rather than 2-dimensional due to the depth into the parts. For example, the illustrated forge interface 66 has a tapered or conical shape. The forge interface 66 is also different from a brazed joint, which uses a braze material that melts at a lower temperature than the joined parts. In particular, the forge interface 66 directly bonds the parts together without any intermediate material (e.g., braze). Accordingly, the forge interface 66 is particularly useful, reliable, and strong for the improved lattice tower 12.

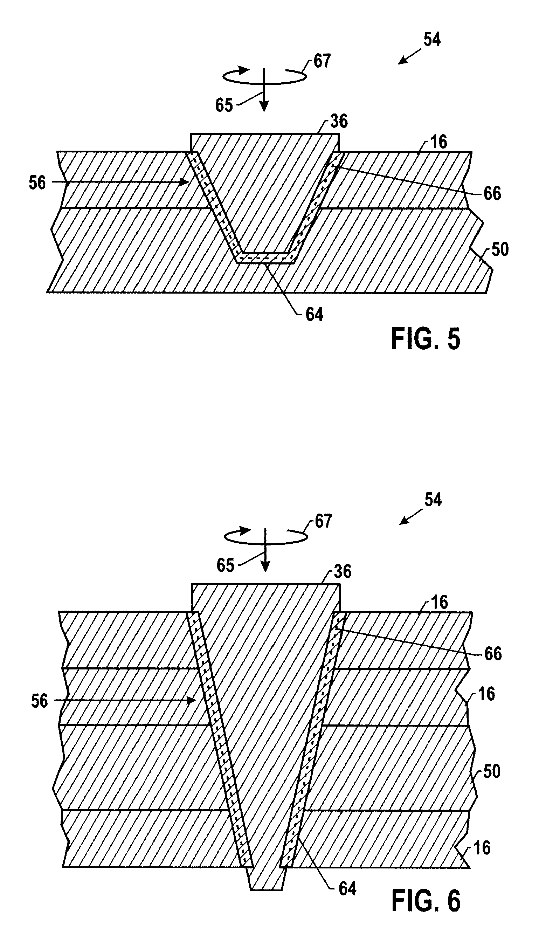

It will be appreciated that FIGS. 4A and 4B represent only one embodiment of a friction forging technique, and that many variations within the scope of the present disclosure may be possible. Although it is beyond the scope of the present disclosure to present every possible embodiment, FIGS. 5-8 depict several alternative friction forge bond 54 configurations that are within the scope of the present invention.

FIG. 5 illustrates an embodiment of a friction forge bond 50 wherein the lug 50 is partially predrilled. In this embodiment, the opening 56 (marked by the forge interface 66) is formed by pre-drilling both the cross-member 16 and the lug 50. As in FIG. 4A, the sidewalls of the opening 56 are tapered to match the taper of the fastener 36. In this embodiment, the pre-drilling of the lug 50 partially penetrates the lug 50 to create the bottom portion of the opening 56. In this way, the surface area of the forge interface 66 may be increased, resulting in a potentially stronger bond. Furthermore, the configuration of FIG. 5 may tend to produce higher temperatures at the forge interface 64 between the fastener 36 and the lug 50, compared to the configuration of FIGS. 4A and 4B, because frictional heating may tend to be greater further away from the rotational axis of the fastener 36. In some embodiments, the cross member 16 and the lug 50 may be pre-drilled separately and later aligned to produce the opening 56. To align the cross member 16 and the lug 50, the fastener 36 may be pressed into the opening 56 while the cross members 16 and the lug 50 are allowed to move laterally. In this way, the opening 56 may enable the proper alignment of the cross member 16 and the lug 50. Alternatively, the opening 56 may simply provide an indication of proper alignment of the cross member 16 and the lug 50, based on whether the fastener 36 is properly seated within the opening 56.

FIG. 6 illustrates an embodiment of a friction forge bond 54 wherein several structural members are fastened together and wherein all of the members are predrilled. As in FIG. 5, the cross-members 16 and the lug 50 are pre-drilled to form the opening 56 (marked by the forge interface 66) and the sidewalls of the opening 56 are tapered to match the taper of the fastener 36. In FIG. 6, however, all of the members are drilled through, so that the opening 56 is a tapered through-hole rather than a cavity as shown in FIG. 5. As shown in FIG. 6, the friction forging technique may be used to join several members at the same friction forge bond 54. By increasing the number of connections that are made at each friction forge bond 54, the overall number of friction forge bonds 54 of the tower 12 may be reduced, thus reducing the total assembly time for the tower 12. As depicted in FIG. 6, cross members 16 may be friction forge bonded to both sides of the lug 50, and multiple cross members 50 may be stacked on one side of the lug 50. As discussed above, the opening 56 may be used to enable the proper alignment of the cross members 16 and the lug 50. For example, the fastener 36 may be driven into the opening 56 while allowing the members to move laterally.

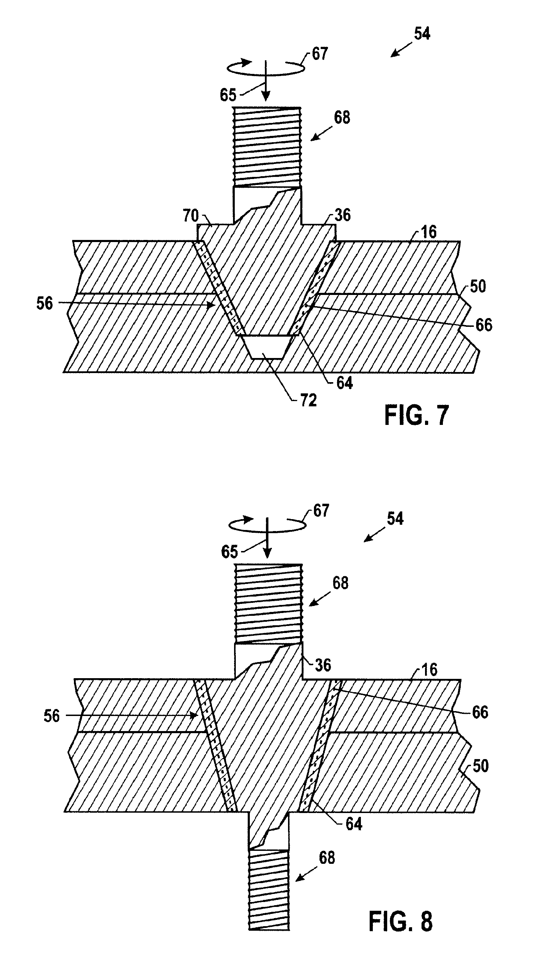

FIG. 7 illustrates a friction forge bond 54 wherein the fastener 36 includes a threaded stud or projection 68 above a shoulder 70, and wherein the opening 56 includes a recess 72 located under the fastener 36. The threaded projection 68 may be used to attach a fixture to the tower 12 including another structural member or a non-structural member such as a power conduit, a lighting fixture, an antenna, etc. In this embodiment, the fastener 36 may include the shoulder 70 for spacing the bolted fixture a certain distance away from the cross member 16. Furthermore, instead of a threaded stud, the projection 68 may include a hook, a loop, or any other type of fastening device. The recess 72 may be formed in the lug 50 by extending the opening 56 deeper into the lug than the fastener 36 can penetrate, such that the taper of the recess 72 is continuous with the taper of the opening 56. The recess 72 may serve at least two purposes. First, by extending the opening 56 deeper than the depth of the fastener 36, the possibility of bottoming the fastener 36 against the bottom surface of the opening 56 before making sufficient contact at the forge interface 66 is lessened and the mechanical tolerances of the pre-drilled hole may be relaxed. Furthermore, the recess 72 may also provide a cavity in which flash from the forge interface 66 may be released.

FIG. 8 illustrates an embodiment of a friction forge bond 54 wherein the fastener 36 extends completely through both the cross member 16 and the lug 50 and includes threaded projections 68 on both sides of the opening 56. As described above, the threaded projections 68 may be used to attach other structural or non-structural members. Furthermore, in this embodiment, the threaded projections 68 may be used to provide a redundant method of fastening the cross member 16 to the lug 50. For example, the projections 68 may receive washers and nuts on opposite sides, such that the nuts can compress the member 16 and lug 50 together. The nuts also may be spot welded to the projections 68

As demonstrated by FIGS. 4-8, embodiments of the present invention include a wide variety of friction forge bond 54 configurations, and the configurations described herein are not intended to be an exhaustive list. Various other embodiments may include other features and combinations of features.

Several characteristics of the forging process described herein may provide advantages over attachment techniques. For example, the friction forging process is a solid state process, wherein neither the joined pieces nor the fastener are heated to the melting point, but rather the lower forging temperature. Secondly, the heat is created directly where it is needed, at the forge interface 66. For these reasons, the amount of heat produced by the friction forging process discussed herein may be relatively small compared to welding techniques such as arc welding or fusion welding, resulting in little or no deformation of the fastened workpieces, and using much less energy. Additionally, the friction forging process may be used without surface preparation, fluxes, filler metals or shield gases. The friction forge bonds 54 are also more repeatable and reliable than typical welding processes, resulting in a reduced likelihood of defects compared to welding.

Compared to bolts, friction forge fasteners are not subject to vibrational loosening or fatigue, eliminating the need for periodic inspections of numerous bolted connections, and thereby reducing maintenance costs of the tower 12 while increasing reliability. Embodiments described herein, therefore, provide an economical and reliable method of fabricating a lattice-type wind turbine tower. Particularly, wind turbine towers with heights greater than approximately 100 to 120 meters.

Technical effects of the invention include the creation of a friction forge bond that resists weakening caused by vibrational loading and is faster, easier to fabricate, and more reliable compared to traditional welding techniques. Another technical effect is the fabrication of a lattice-type wind turbine tower using such friction forge bonds.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. A system, comprising:
   a lattice structure comprising a plurality of crosswise members;
   a friction forge bond between a first member and a second member of the plurality of crosswise members.
2. The system of clause 1, comprising a wind tower comprising the lattice structure, and a wind turbine coupled to the wind tower.
3. The system of any preceding clause, comprising a wind farm comprising a plurality of the wind towers.
4. The system of any preceding clause, wherein the friction forge bond is at least partially subsurface relative to the first member, the second member, or both.
5. The system of any preceding clause, wherein the friction forge bond comprises an annular geometry extending at least partially through the first member.
6. The system of any preceding clause, wherein the friction forge bond comprises an annular geometry extending completely through the first member and at least partially through the second member.
7. The system of any preceding clause, wherein the friction forge bond comprises an annular geometry extending completely through both the first and second members.
8. The system of any preceding clause, wherein the friction forge bond comprises a conical geometry.
9. The system of any preceding clause, comprising a stud disposed in an opening in the first and/or second members, wherein the friction forge bond is disposed in the opening, and the stud comprises a first fastener independent from the friction forge bond.
10. The system of any preceding clause, wherein the first fastener comprises a first threaded portion independent from the friction forge bond.
11. The system of any preceding clause, wherein the stud comprises a second fastener having a second threaded portion independent from the friction forge bond, wherein the first and second threaded portions are on opposite sides of the first and second members relative to one another.
12. A method, comprising
   friction forge bonding first and second members of a lattice structure having a plurality of crosswise members.
13. The method of clause 12, wherein friction forge bonding comprises assembling a wind tower having the lattice structure, and further comprising mounting a wind turbine to the wind tower.
14. The method of clause 12 or 13, wherein friction forge bonding comprises:
   rotating a stud;
   pressing the stud toward the first and second members while rotating the stud;
   generating friction and heat at an interface between the stud and the first and second members due to the rotating and pressing of the stud; and
   forging the stud to both the first and second members due to the friction and heat.
15. The method of any of clauses 12 to 14, wherein friction forge bonding comprises pre-heating the stud, the first member, the second member, or a combination thereof, prior to generating the friction and heat at the interface.
16. The method of any of clauses 12 to 15, wherein friction forge bonding comprises heat treating the stud, the first member, the second member, or a combination thereof, after forging the stud to both the first and second members.
17. The method of any of clauses 12 to 16, comprising:
   aligning and clamping the first and second members;
   pressing the stud into an opening extending at least partially into or through the first member, the second member, or both; and
   generating the friction at the interface between the stud and interior surfaces of the opening.
18. A system, comprising:
   a friction forge system, comprising:
      a press configured to linearly move a stud toward first and second members of a lattice structure;
      a drive configured to rotate the stud along an interface including both the first and second members to generate friction and heat to create a friction forge bond at the interface;
      a heater configured to pre-heat or post heat treat the stud, the first member, the second member, or a combination thereof, relative to the creation of the friction forge bond.
19. The system of clause 18, comprising a plurality of members configured to assemble with one another in a crisscross pattern to define the lattice structure, wherein the friction forge system is configured to create the friction forge bond between the plurality of members.
20. The system of clause 18 or 19, wherein the lattice structure defines a wind tower, and further comprising a wind turbine configured to mount to the wind tower.

## Claims

1. A system, comprising:
a lattice structure (20) comprising a plurality of crosswise members (16); and
a friction forge bond (54) between a first member (16) and a second member (16) of the plurality of crosswise members (16).

2. The system of claim 1, comprising a wind tower (12) comprising the lattice structure (20), and a wind turbine (10) coupled to the wind tower (12).

3. The system of any preceding claim, comprising a wind farm comprising a plurality of the wind towers (12).

4. The system of any preceding claim, wherein the friction forge bond (54) is at least partially subsurface relative to the first member (16), the second member (16), or both.

5. The system of any preceding claim, wherein the friction forge bond (54) comprises an annular geometry (66) extending at least partially through the first member (16).

6. The system of any preceding claim, wherein the friction forge bond (54) comprises an annular geometry (66) extending completely through the first member (16) and at least partially through the second member (16).

7. The system of any preceding claim, wherein the friction forge bond (54) comprises an annular geometry (66) extending completely through both the first and second members (16).

8. The system of any preceding claim, wherein the friction forge bond (54) comprises a conical geometry (66).

9. The system of any preceding claim, comprising a stud (36) disposed in an opening (56) in the first and/or second members (16), wherein the friction forge bond (54) is disposed in the opening (56), and the stud (36) comprises a first fastener (68) independent from the friction forge bond (54).

10. The system of any preceding claim, wherein the first fastener (68) comprises a first threaded portion independent from the friction forge bond (54).
